# EUROPEAN PATENT APPLICATION

(11) **EP 1 677 301 A2**
(43) Date of publication of application: **05.07.2006**
(21) Application number: 05112025.1
(22) Date of filing: 13.12.2005
(51) Int. Cl.: G11B 20/14, G11B 20/12, G11B 27/19, G11B 27/24, G11B 7/005, H03L 7/06

(54) **Synchronized signal detector and synchronized signal detecting method**

(30) Priority: 28.12.2004 JP 2004380500
(71) Applicant: KABUSHIKI KAISHA TOSHIBA, Tokyo 105-8001 (JP)
(72) Inventor: Kojima, Satoru Toshiba Corporation,, Minato-ku, Tokyo 105-8001 (JP)
(74) Representative: Henkel, Feiler & Hänzel

(57) **Abstract**

A SYNC detection window creating section (66) creates a SYNC window signal on the basis of the output of a counter (64) counting a synchronized phase detection signal at a WDU cycle and the output of a counter (65) counting WDU at a Segment cycle. On the other hand, a synchronized signal is detected from the synchronized phase detection signal on the basis of the pattern to output a detection signal. Then, the detection signal obtained during a period of generation of a SYNC window is outputted as the synchronization detection signal.

## Description

The present invention relates to improvement of a synchronized signal detector that is used for, for example, an optical disk device or the like and a synchronized signal detecting method.

As is well known, at the present day, an optical disk such as a digital versatile disk (DVD) has become widely used as a digital recording medium and high reliability is expected for an optical disk device, which reproduces the optical disk. In such an optical disk, a storage field is provided on a spiral track and the address information of the storage field includes a track number.

However, in the DVD, its specification itself has been developed and a Hi-Vision-compliant next-generation DVD specification is also developed. In the next-generation DVD specification, a memory density is higher than that of a current-generation DVD specification, so that a CN ratio of a reproduction signal tends to be lowered and when fetching the synchronized signal and the address information from this reproduction signal, they are relatively vulnerable to a disturbance such as a noise.

In Jpn. Pat. Appln. KOKAI Publication No. 2003-187457, the structure of acquiring a synchronized signal by shifting an input signal of one bit by a shift register and matching the signal with a pattern is disclosed. However, in Jpn. Pat. Appln. KOKAI Publication No. 2003-187457, the synchronized signal is vulnerable to a disturbance such as a noise due to an input signal of one bit. Further, in the case of a next-generation specification, a synchronization (SYNC) pattern is similar to a physical address pattern, so that there is a possibility that, for example, the physical address is falsely detected as the SYNC and the false operation often occurs.

Moreover, specifically, in the circuit configuration of Jpn. Pat. Appln. KOKAI Publication No. 2003-187457, when there is no disturbance such as a noise, a portion specific to a SYNC pattern in a wobble signal at a certain SYNC pattern position can be accurately recognized and a synchronized signal indicating that the SYNC is detected at a certain position is outputted.

On the contrary, if a partial address pattern located on a certain address position is affected by disturbance such as a noise and the signal gets out of shape, the signal may be falsely detected as the SYNC. In this way, if the SYNC is falsely detected, a signal following the falsely detected SYNC is falsely recognized as a physical address, so that a correct physical address cannot be acquired and the correct position on the disk is missed. This leads to the false operation.

In addition, in Jpn. Pat. Appln. KOKAI Publication No. 2003-123257, a structure is described, in which, sampling a binary wobble signal (32T) of one bit with a recording frequency 1T, clearing a counter (a word SYNC counter: count up IT) at a first rising edge (32T) of a SYNC pattern, and opening a ±y (y: an integer number) SYNC detection window centering on the edges after 128T, a signal detected in the SYNC detection window is made into a SYNC.

However, according to the configuration disclosed in Jpn. Pat. Appln. KOKAI Publication No. 2003-123257, since a wobble signal of one bit is used, the SYNC is vulnerable to the disturbance such as a noise. In addition, if the first rising edge (32T) of the SYNC pattern is not correctly recognized, the counter is not cleared and the SYNC detection window cannot be opened at a correct position. This leads to frequent occurrence of the false detection of the SYNC.

Therefore, the present invention has been made taking the foregoing problems into consideration and an object of which is to provide a synchronized signal detector and a synchronized signal detecting method which are capable of detecting synchronization and a physical address effectively and correctly without being influenced by a disturbance such as a noise.

According to one aspect of the present invention, there is provided a synchronized signal detector comprising: a creating section configured to create a synchronized phase detection signal in which a second data unit including a synchronization field made of a first data unit and an address field made of plural aggregations of the first data unit is repeatedly arranged; a generation section configured to generate a synchronization window signal corresponding to a position of the synchronization filed on the basis of a value obtained by counting the synchronized phase detection signal created by the creating section at a cycle of the first data unit and a value obtained by counting the number of the first data unit by a cycle of the second data unit; a detecting section configured to detect a synchronized signal showing the head of the address field while determining the sate of the synchronization field from the synchronized phase detection signal created by the creating section; and an output section configured to output a detection signal outputted from the detecting section as a synchronization detection signal during a period of generation of a synchronization window signal by the generation section.

According to another aspect of the present invention, there is provided a synchronized signal detecting method comprising: a first step of creating a synchronized phase detection signal in which a second data unit including a synchronization field made of a first data unit and an address field made of plural aggregations of the first data unit is repeatedly arranged; a second step of generating a synchronization window signal corresponding to a position of the synchronization filed on the basis of a value obtained by counting the synchronized phase detection signal created in the first step at a cycle of the first data unit and a value obtained by counting the number of the first data unit by a cycle of the second data unit; a third step of detecting a synchronized signal showing the head of the address field while determining the sate of the synchronization field from the synchronized phase detection signal created in the first step; and a forth step of outputting a detection signal outputted from the third step as a synchronization detection signal during a period of generation of a synchronization window signal by the second step.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an embodiment of the invention and explaining an optical disk device;
FIG. 2 is a view explaining one example of a pickup of the optical disk device according to the embodiment;
FIG. 3 is a view explaining a wobble PLL section/address detecting section of the optical disk device according to the embodiment;
FIG. 4 is a view explaining one example of a signal waveform when reading a signal at the wobble PLL section/address detecting section of the optical disk device according to the embodiment;
FIG. 5 is a view explaining a peripheral layout of a recording track of an optical disk treated by the optical disk device according to the embodiment;
FIG. 6 is a view explaining a physical address format of a wobble signal of the optical disk treated by the optical disk device according to the embodiment;
FIG. 7 is a block diagram explaining a SYNC detection circuit of the wobble PLL section/address detecting section of the optical disk device according to the embodiment;
FIG. 8 is a view explaining an operation timing of detection of a SYNC pattern in the optical disk device according to the embodiment;
FIG. 9 is a view explaining the operation timing of detection of the SYNC pattern in the initial state in the optical disk device according to the embodiment;
FIG. 10 is a view explaining the operation timing of detection of the SYNC pattern in the normal state in the optical disk device according to the embodiment;
FIG. 11 is a view explaining one example of the operation timing of detection of the SYNC pattern in the state that a noise and a disturbance are received in the optical disk device according to the embodiment;
FIG. 12 is a view explaining the other example of the operation timing of detection of the SYNC pattern in the state that the noise and the disturbance are received in the optical disk device according to the embodiment;
FIG. 13 is a view explaining the operation timing of detection of the SYNC pattern in a wobble signal that may falsely detect the SYNC in the optical disk device according to the embodiment;
FIG. 14 is a block diagram explaining a physical address field head detection circuit of the wobble PLL section/address detecting section of the optical disk device according to the embodiment; and
FIG. 15 is a block diagram explaining the operation timing of the detection of the physical address head in the optical disk device according to the embodiment.

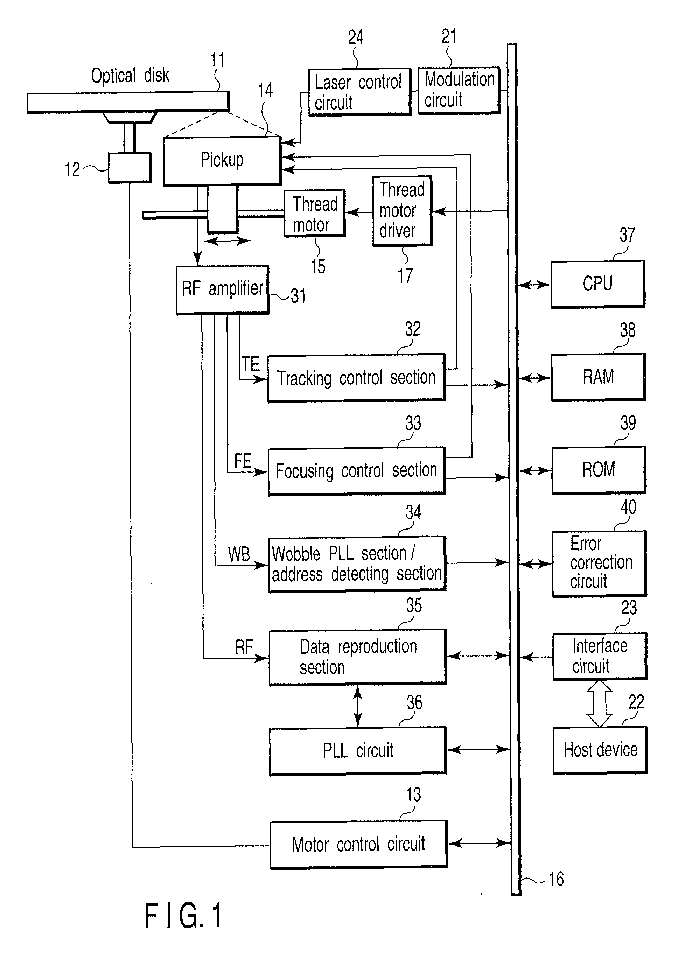

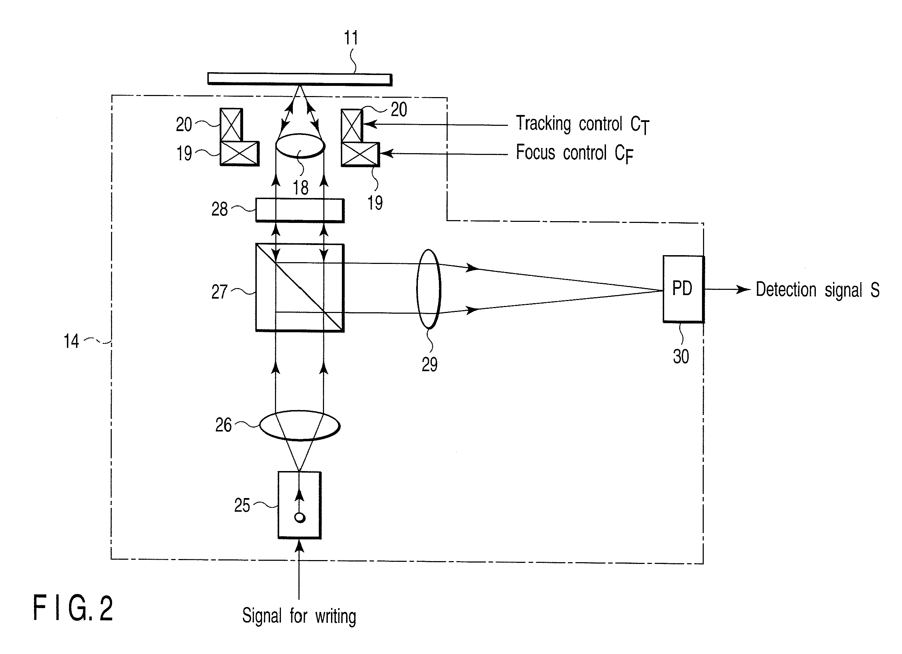

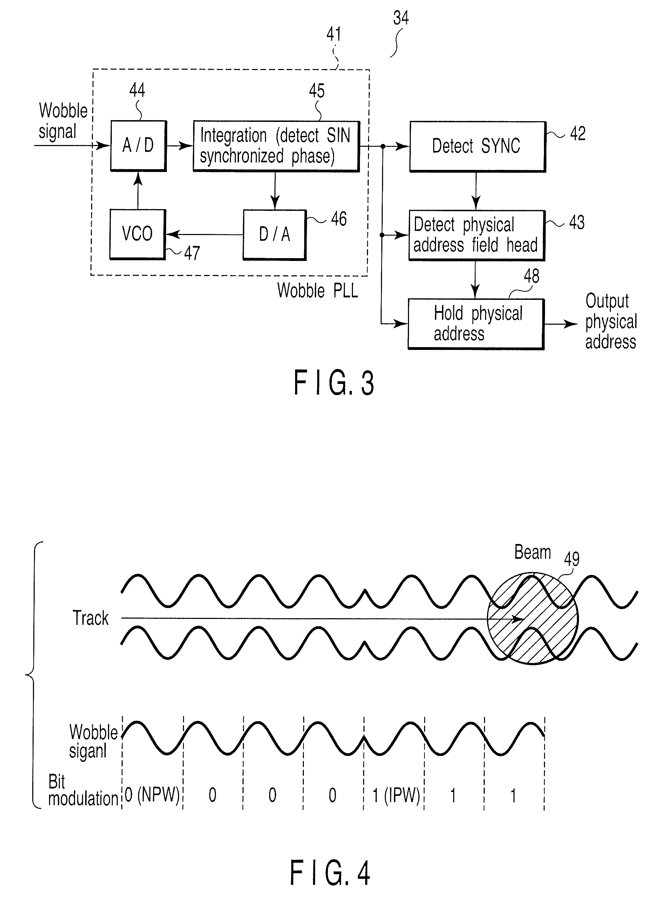

An embodiment of the present invention will be described in detail below with reference to the drawings. FIG. 1 illustrates a constituent example of an optical disk of an embodiment of the invention, FIG. 2 illustrates a constituent example of a pickup of the optical disk device of an embodiment of the invention, and FIG. 3 illustrates a constituent example of a wobble PLL section/address detecting section of the optical disk device of an embodiment in accordance with the present embodiment.

The optical disk device according to an embodiment of the present invention has the structure as shown in FIGS. 1 and 2. Here, the explanation is given assuming that an optical disk 11 is an optical disk capable of recording (or writing) the user data.

A recordable or writable optical disk includes, for example, a next-generation DVD-RAM (random access memory), a DVD-RW (rewritable), and a DVD-R (recordable) or the like using a blue laser light with a wavelength around 405 nm, or a current-generation DVD-RAM, a DVD-RW, and a DVD-R or the like using a red laser light with a wavelength around 650 nm.

On the surface of the optical disk 11, a land track and a groove track are formed in a spiral shape. This optical disk 11 is rotatably driven by a spindle motor 12. The revolving speed of this spindle motor 12 is controlled by a motor control circuit 13.

The recording and reproduction of the information in the optical disk 11 is carried out by a pickup 14. The pickup 14 is connected to a thread motor 15 via a gear. This thread motor 15 is controlled by a thread motor driver 17 to be connected to a data bus 16. A permanent magnet (not shown) is provided on a fixing section of the thread motor 15 and by exciting a drive coil (not shown), the pickup 14 moves in a radial direction of the optical disk 11.

As shown in FIG. 2, an objective lens 18 is provided on the pickup 14. The objective lens 18 can move to a focusing direction (an optical axial direction of the lens) by driving a drive coil 19 and it can move to a tracking direction (a direction perpendicular to an optical axis of the lens) by driving a drive coil 20, so that the objective lens 18 can perform track jump by moving on beam spots of the laser light.

A modulation circuit 21 create EFM data by, for example, 8-14 modulating (EFM: eight to fourteen modulation) the user data to be supplied from a host device 22 via an interface circuit 23 upon recording of the information. A laser control circuit 24 supplies a signal for writing to a semiconductor laser diode 25 on the basis of the EFM data supplied from the modulation circuit 21 upon recording of the information (upon formation of a mark). In addition, a laser control circuit 24 supplies a signal for reading smaller than the signal for writing upon reading of the information to a semiconductor laser diode 25.

The semiconductor laser diode 25 generates a laser light in accordance with the signal for writing to be supplied from the laser control circuit 24. The laser light radiated from the semiconductor laser diode 25 is irradiated on the optical disk 11 via a collimator lens 26, a half prism 27, an optical system 28, and an objective lens 18. The reflection light from the optical disk 11 is introduced to an optical detector 30 via the objective lens 18, the optical system 28, the half prism 27, and a collective lens 29.

The optical detector 30 is composed of a tetrameric optical detection cell and it supplies signals A, B, C, and D to an RF (radio frequency) amplifier 31. The RF amplifier 31 supplies a tracking error signal TE corresponding to (A + D) - (B + C) to a tracking control section 32 and then, it supplies a focus error signal FE corresponding to (A + C) - (B + D) to a focusing control section 33.

Further, the RF amplifier 31 supplies a wobble signal WB corresponding to (A + D) - (B + C) to a wobble PLL section/address detecting section 34 and supplies the RF signal corresponding to (A + D) + (B + C) to a data reproduction section 35.

On the other hand, the output signal of the focusing control section 33 is supplied to the drive coil 19 in a focusing direction. Thereby, the focus is controlled so that the laser light is always just focused on a recording film of the optical disk 11. In addition, the tracking control section 32 creates a track drive signal in accordance with the tracking error signal TE and may supply it to the drive coil 20 in a tracking direction.

When the focusing control and the tracking control are carried out, the change of a reflection ratio from a pit or the like formed on the track of the optical disk 11 in accordance with the recording information is reflected on a sum signal RF of the output signals of the optical detection cell of the optical detector 30. This signal is supplied to the data reproduction section 35.

The data reproduction section 35 may reproduce the recording data on the basis of a clock for reproduction from a PLI circuit 36. In addition, the data reproduction section 35 has a function to measure the amplitude of the RF signal and the measured value is read by a CPU (central processing section) 37.

When the objective lens 18 is controlled by the tracking control section 32, the pickup 14 is controlled by controlling the thread motor 15 so that the objective lens 18 is located on the optimum position of the optical disk 11.

It is possible to construct the motor control circuit 13, the laser control circuit 24, the focusing control section 33, the tracking control section 32, the data reproduction section 35, and the PLL circuit 36 or the like within one LSI (large scale integration) chip as a servo control circuit.

In addition, these circuits are controlled by the CPU 37 via the bus 16. The CPU 37 comprehensively controls this optical disk device on the basis of the operation command to be supplied from the host device 22 via the interface circuit 23.

Further, the CPU 37 uses a RAM 38 as an operation field and carries out the certain operation in accordance with the program recorded in a ROM (read only memory) 39.

Then, the data reproduced by the data reproduction section 35 is used for reproduction of an image, a sub image, and a voice or the like after the error correction processing is carried out by an error correction circuit 40.

FIG. 3 illustrates a concrete example of a circuit configuration (including the structure creating a physical address from the wobble signal) corresponding to the wobble PLL section/address detecting section 34 shown in FIG. 1. The main section of this structure is roughly divided into a wobble PLL circuit 41, a SYNC detection circuit (synchronization signal detection circuit) 42, and a physical address field head detection circuit (address detection circuit) 43.

Here, the wobble PLL circuit 41 has an A/D circuit 44 for digitalizing a wobble signal WB, an integral circuit (SIN synchronized phase detection circuit) 45 integrating the output from the A/D circuit 44, a D/A circuit 46 for making the output into analog, and a VCO circuit 47 for supplying an oscillation signal of which cycle is controlled on the basis of a signal level from the D/A circuit 46 to the SYNC detection circuit 42, respectively.

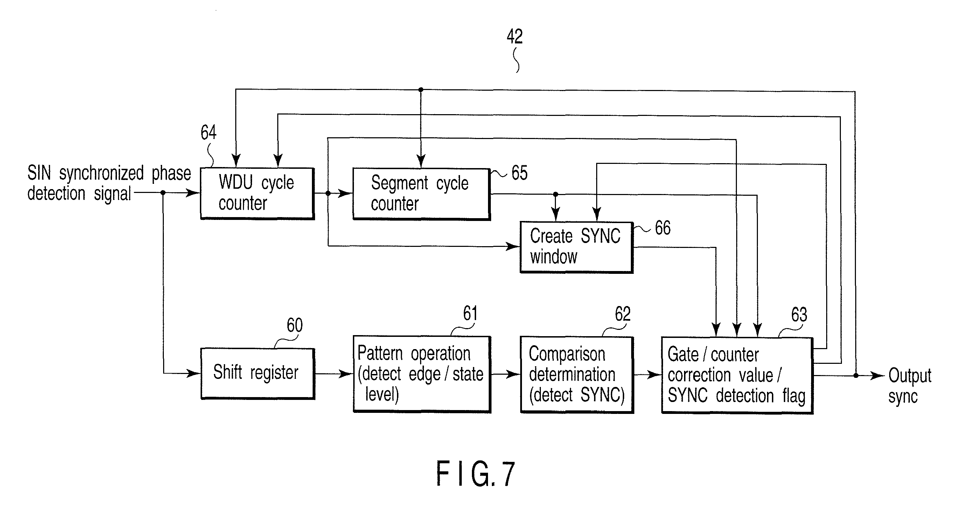

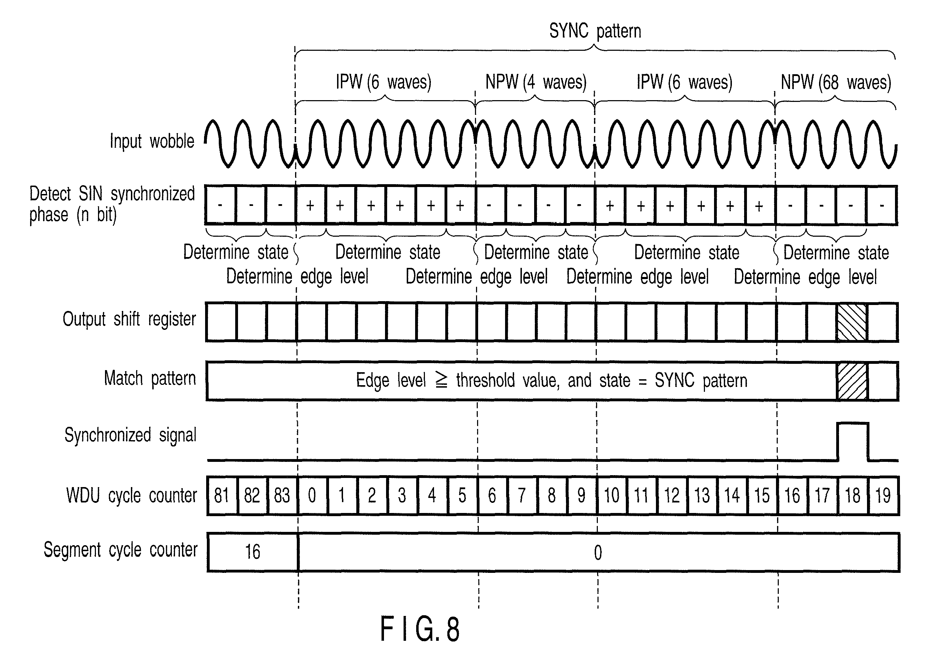

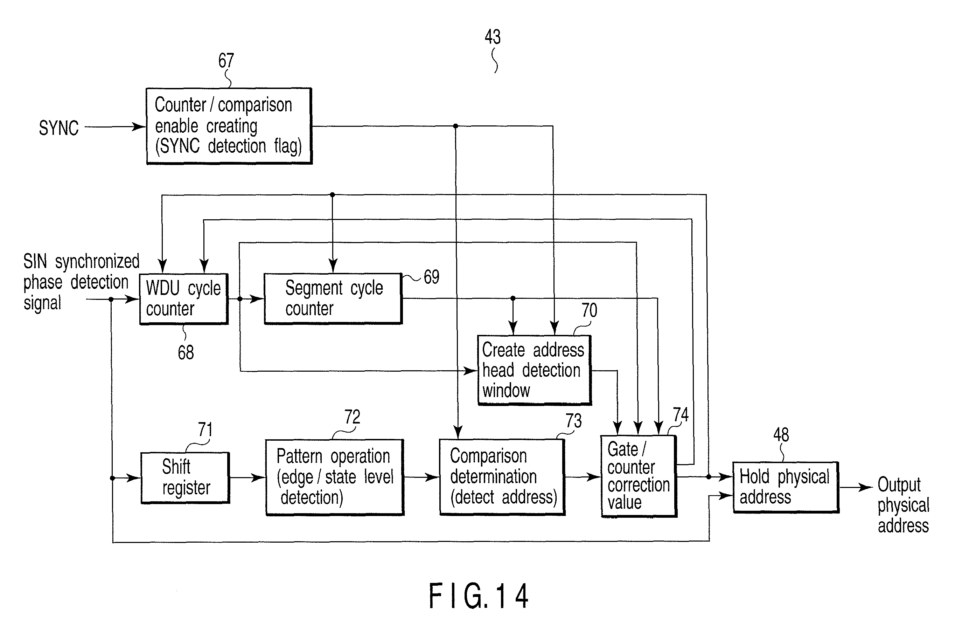

In the wobble PLL circuit 41, the integration operation between a wobble input signal WB and a SIN wave is carried out, and a SIN synchronized phase detection signal as illustrated in FIGS. 8 to 13 (to be described later) is produced. Here, in the SIN synchronized phase detection signal, an inversion phase wobble portion (an IPW portion) is outputted at a "+" value and a normal phase wobble portion (an NPW portion) is outputted at a "-" value. From this SIN synchronized phase detection signal, a SYNC pattern and an address pattern are detected. In the structure of FIG. 3, particularly, circuit blocks 42 and 43 have characteristics and the details of these circuit blocks will be described later with reference to FIG. 7 and FIG. 14 or the like.

The wobble PLL section/address detecting section 34 in FIG. 3 includes a physical address holding section 48 in addition to the wobble PLL circuit 41, the SYNC detection circuit 42, and the physical address field head detection circuit 43.

The circuit blocks 41 to 48 shown in FIG. 3 may be configured by a discrete electronic section, however, in the mass production, it is desirable that they are made into an IC (a controller LSI).

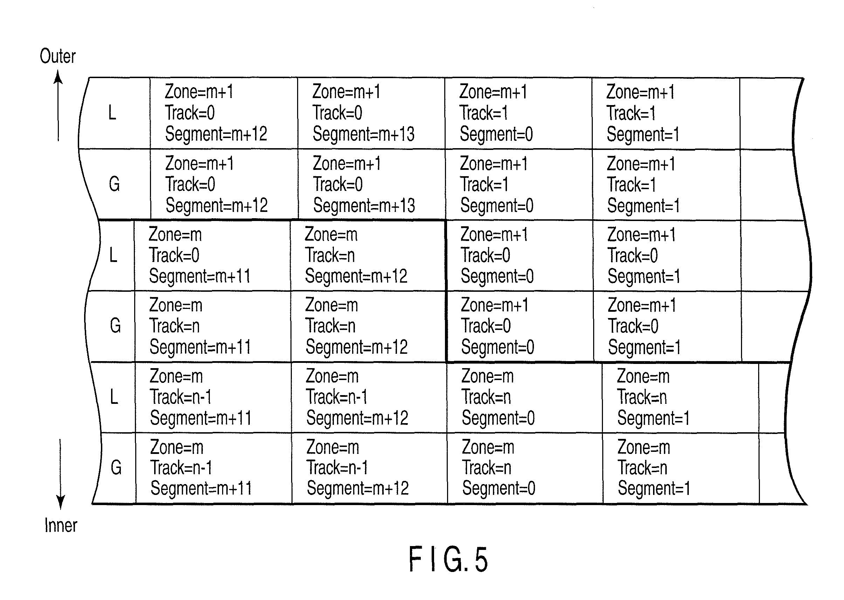

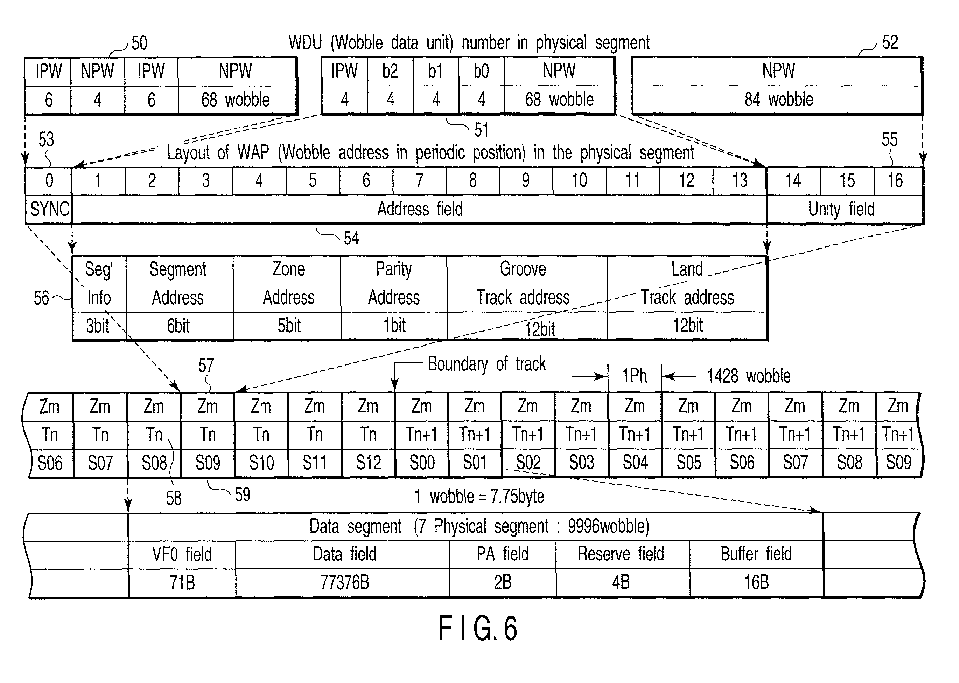

FIG. 4 illustrates an example of a signal waveform when reading a signal at the wobble PLL section/address detecting section 34 of the optical disk device. FIG. 5 illustrates an example of a peripheral layout of a recording track of an optical disk treated by the optical disk device. FIG. 6 illustrates a physical address format (a next-generation DVD physical address format) of a wobble signal of the optical disk device treated by the optical disk device.

FIG. 4 illustrates each signal relation when a recording track is treated in a wobble modulation as an addressing method of the optical disk (recording medium) 11. In this case, the digital data is reproduced (or the digital data is recorded) from the wobbled recording track and the data recorded in this time is recorded at a designated position.

Then, the physical address information to decide this can be acquired by reading and demodulating a wobble signal WB corresponding to the wobble of the recording track. FIG. 4 illustrates a reading beam 49 on the track, the detected wobble signal WB, and a modulation rule when the information is embedded in the wobble modulation. Here, a sin wave of the wobble signal WB (a normal phase wobble: NPW) is defined as the bit information "0" and using the sin wave of inversion (the inversion phase wobble: IPW) as "1", the address information is recorded.

FIG. 5 illustrates the layout of the physical address information with respect to the structure that the recording track of the optical disk (recording medium) 11 is used together with the land (L)/ groove (G). In this example, the addressing due to the wobble modulation is carried out by the groove track, so that the correct addressing should be constructed even in the reproducing the record to the land track.

Therefore, a structure called as a zone format is adopted, the optical disk 11 is divided in a plurality of zones in a radial direction, a segment packet of which recording capacity is fixed in each zone is configured, and "a zone number", "a track number", and "a segment number" as the physical address information are embedded in this segment packet in the wobble modulation.

When the zone is changed, a dividing angle is changed so as to configure the segment with the recording density approximately the same, and optimization of record capacity is achieved. According to the structure as shown in FIG. 5, even in the land/groove format, the address information due to the groove wobble takes the same value between the adjacent tracks except for the track number and the physical address information can be read out from the land track. The information of the track number can be acquired in land or groove by arranging that for land and that for groove. Therefore, no problem occurs.

FIG. 6 illustrates the data structure of the physical address by the entire relation. The physical address information is embedded in aggregations 53 to 55 called as WAP (wobble address in periodic position) that are configured by seventeen groups (50 to 52) of WDUs (wobble data portion). Since a track wobble is formed by coupling these WAPs, a cycle decided by the WAP becomes the cycle in which the physical address data is embedded.

The physical data 54 is configured by 39 bits. Here, an information bit group 56 including "the segment information", "a segment address", "a zone address", "a parity address", "a groove track address", and "a land track address" is divided every three bits, is distributed to each WDU, and is embedded in the WDU by the modulation processing. In this way, a zone number 57, a track number 58, and a segment number 59 are stored in the WDU.

The WDU 51 in which the address information is embedded constructs the address information by three bits, and each one bit corresponds to four wobbles. Head four wobbles of each WDU before the physical address information of three bits are constructed by IPW so as to make the identification of the head of the WDU easier. As a result, sixty eight wobbles after the address information is embedded in each WDU is defined as NPW.

Since the entirety of the address data is made of thirty nine bits, the necessary WDU 51 is made into thirteen units, the synchronized signal 53 of the WAP is arranged at the WDU of the head side, and three units at the rear side is constructed by a unity field 55 with no modulation.

In such a recording track in which the physical address is embedded in the track wobble modulation, the information data is recorded. In this case, as the recording data, the VFO (a certain frequency signal to easily generate a channel clock for demodulation of the data in the reproduction operation) of seventy one bites is recorded in the head and the total twenty two bites including "a PA field", "a reserved field", and "a buffer field" for performing the data block connection processing are recorded in the rear side for 77,376 bits of data.

77, 469 bites are recorded in the seven physical segments (physical segment: corresponding to 9996 wobbles) in total. Under such a rule, the information data is recorded in a position designated using the "physical segment" address data. Therefore, it is important to correctly read the address data of the physical segment.

The physical address is recorded in the optical disk 11 with the track wobble modulated in the above-described structure. In the case of reading the physical address from the wobble of such an optical disk 11, the synchronized signal is detected from the wobble signal WB, the timing signal corresponding to this synchronized signal is created, and in accordance with this timing signal, the address information is extracted from the wobble signal, demodulated, and acquired.

FIG. 7 illustrates an example of the SYNC detection circuit 42. The block structure of this SYNC detection circuit 42 is roughly divided into a SYNC detection circuit (a shift register 60 + a pattern operation section (calculate state/edge level) 61 + a comparison detecting section (detecting SYNC) 62 + a Gate/counter correction value/SYNC detection flag creation section 63), a counter/SYNC detection window creation section (a WDU cycle counter 64 + a Segment cycle counter 65 + a SYNC detection window creating section 66).

In the SYNC detection sections 60 to 63, there is a circuit to detect a portion specific to the SYNC pattern, namely, IPW 6 wobbles + NPW 4 wobbles + IPW 6 wobbles portion in 84 wobble signals of a certain SYNC pattern position ("0"th WAP in FIG. 6). At first, the SIN synchronized phase detection signal from the wobble PLL circuit 41 is shifted by the shift register 60.

The processing result of the shift register 60 is inputted in the pattern operation section 61, and there, a difference operation of a coding changed point of the shifted signal (IPW → NPW / NPW → IPW: edge detection) and detection of stability (accordance of the codes) of the state by comparing the codes of the signals at a point other than the edge changed point are carried out. When it is determined that the edge detection value at the pattern operation section 61 is not less than the threshold value and the state coincides with SYNC, the comparison determining section 62 outputs a detection signal assuming that the synchronization signal is detected.

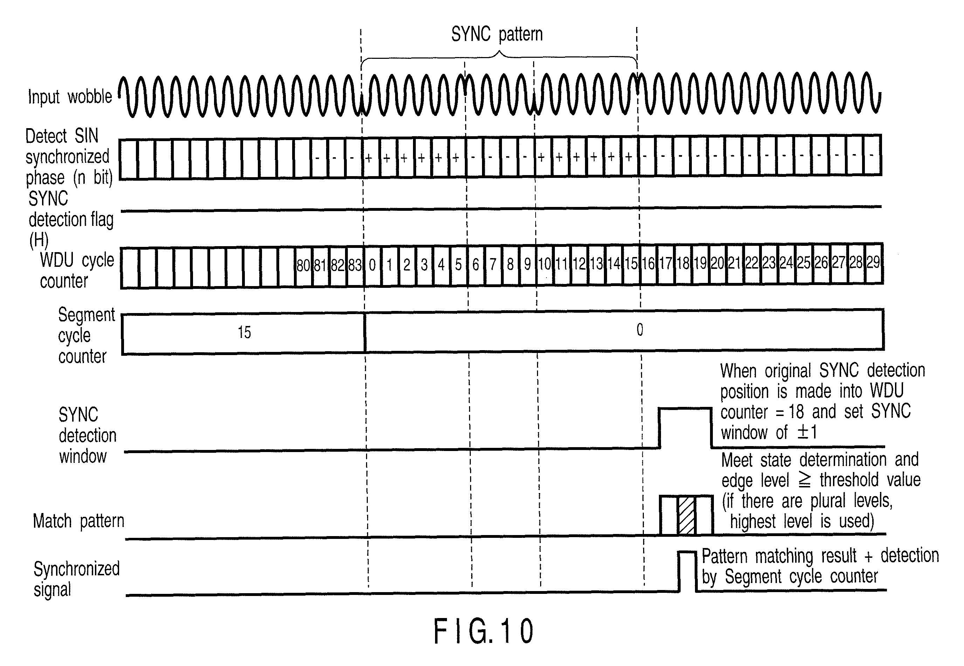

Next, in the counter/SYNC detection window creation sections 64 to 66, 1 WDU (84 wobbles in SYNC, the physical address, and the unity filed, respectively, in FIG. 6) is counted up by the WDU cycle counter 64, and the component 17 of 1 WAP is counted up by the Segment cycle counter 65. Then, on the basis of the outputs of these counters 64 and 65, the SYNC detection window creation section 66 creates a SYNC detection window (Gate) signal shown in FIGS. 10 to 13.

FIG. 8 shows an operation timing of detection of a SYNC pattern. Upon detection of the SYNC pattern, in the case where it is determined that the SYNC pattern is satisfied due to both of the state determination and the edge level determination, it is assumed that the SYNC is detected.

In the state determination, the accordance of the state of a level "+" or "-" of the SIN synchronized phase detection signal is determined. In the edge level determination, the signal level of the difference at the change point of the code of the SIN synchronized phase detection signal is determined. In the case where this signal level is not less than a certain threshold value, this signal is determined to be at a correct edge level.

In FIG. 8, the state and the edge level are determined by using the SYNC pattern (IPW 6 wobbles + NPW 4 wobbles + IPW 6 wobbles) and a unity 3 wobble before and after the SYNC pattern. Therefore, making the head of the SYNC pattern into "0" of the WDU cycle counter 64 and the Segment cycle counter 65, the SYNC detecting position is made into the WDU cycle counter 64 = 18, and the Segment cycle counter 65 = 0.

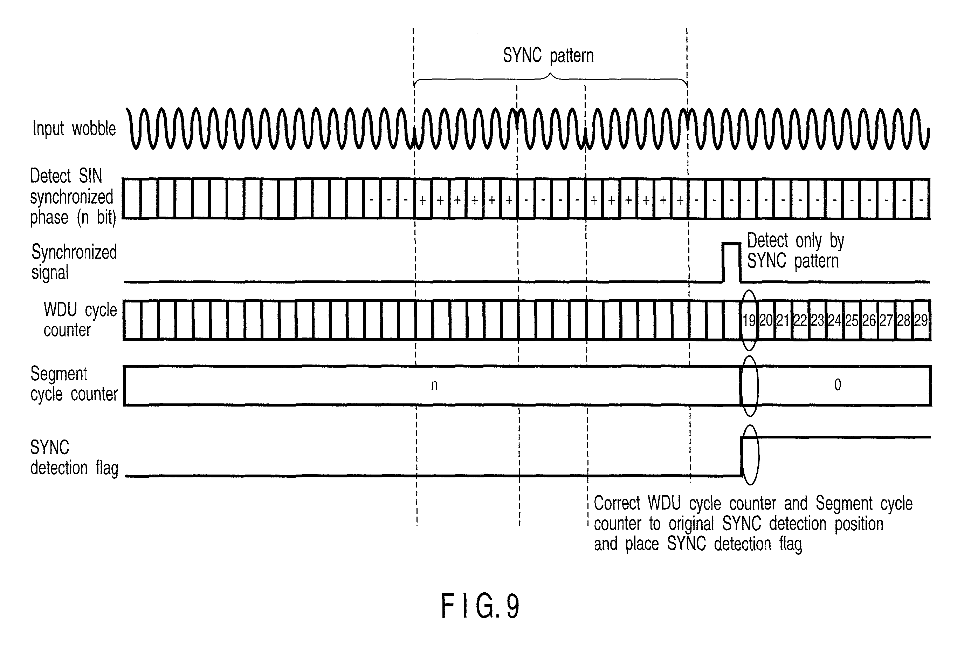

FIG. 9 illustrates the operation timing of the initial state such as start-up of a power source. Since both of the WDU cycle counter 64 and the Segment cycle counter 65 are not synchronized with the SYNC signal at first, the SYNC detection is carried out by using the SYNC pattern.

In this case, by performing the SYNC detection using unity disclosed in Jpn. Pat. Appln. KOKAI Publication No. 2004-193768 disclosing the invention by the same inventor as the present application and being filed by the same applicant as the present application, the accuracy of the SYNC detection can be improved.

In the case where the SYNC is detected, the WDU cycle counter 64 = 18 as the original SYNC detecting position, namely, the value of the next WDU cycle counter 64 of which SYNC is detected is corrected to "19" and further, the counter is corrected to the Segment cycle counter 65 = 0. In addition, the SYNC detection flag is placed in this case.

FIG. 10 illustrates the operation timing when the SYNC is detected from the previous SYNC detection in the normal segment cycle (1 segment = 1428 wobbles: SYNC + 13 physical addresses + 3 unities) because the cycle is not particularly affected by a noise and disturbance or the like when the SYNC is detected at least once and the SYNC flag is placed.

In this SYNC detection, opening the SYNC detection window by using the WDU cycle counter 64 and the Segment cycle counter 65, it is determined that the SYNC is detected when the SYNC is detected in the SYNC detection window.

In this detection, the SYNC meets the segment cycle compensated by a physical standard, so that it can be said that the SYNC due to the SYNC pattern detection detected in this SYNC detection window has high reliability. In the SYNC detection window, the SYNC detection position is the WDU cycle counter 64 = 18 ± 1, however, it is assumed that the SYNC detection window is opened by ± n in a unit of a WDU cycle counter 64 (a unit of 1 wobble).

In FIG. 10, the point of the edge level, which meets the state detection by the SYNC detection and is not less than the threshold value (when a plurality of points not less than the threshold value is found in the SYNC detection window, the point of the highest level is used), is located at the WDU cycle counter 64 = 18, and this results in that the SYNC is detected after 1428 wobbles from the SYNC detection point one wobble before the WDU cycle counter 64 = 18 and no correction of WDU counter 64 is required.

In the meantime, it is assumed that the SYNC detection flag should be dropped down when the SYNC is not detected in the SYNC detection of this time or when the SYNC is not detected continuously in the continuous plural times of SYNC detection hereinafter.

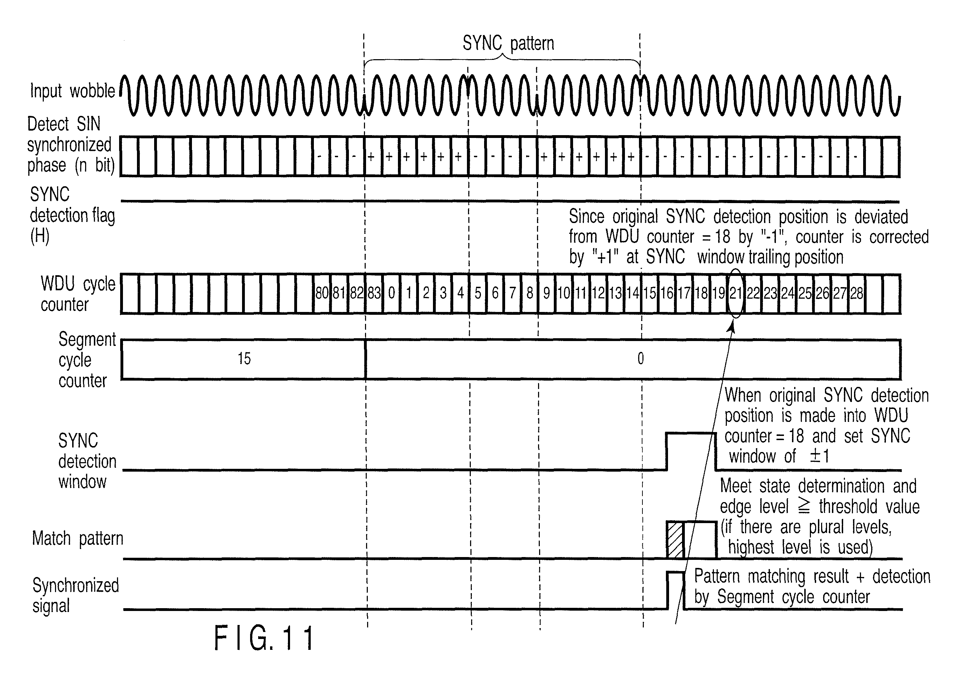

FIG. 11 illustrates the operation timing when the SYNC is detected one wobble before the previous SYNC detection (the segment cycle - 1: after 1427 wobbles) due to the influence by the noise and the disturbance or the like when the SYNC is detected at least once and the SYNC detection flag is placed.

Also in this SYNC detection, as with FIG. 10, the SYNC detection window is opened at the WDU cycle counter 64 = 18 ± 1, and when the SYNC is detected in this SYNC detection window, it is determined that the SYNC detection is achieved.

In FIG. 11, the point at the edge level, which meets the state detection by the SYNC detection and meets the threshold value, is located at the WDU cycle counter 64 = 17, and this results in that the SYNC is detected at a segment cycle of not after 1428 wobbles but after 1427 wobbles from the SYNC detection point one wobble before the WDU cycle counter 64 = 17, so that the WDU cycle counter 64 is late by "-1". Therefore, the WDU cycle counter 64 is corrected to be speeded up by "+1", namely, the correction of the WDU cycle counter 64 = 20 → 21 is carried out at a SYNC window trailing position.

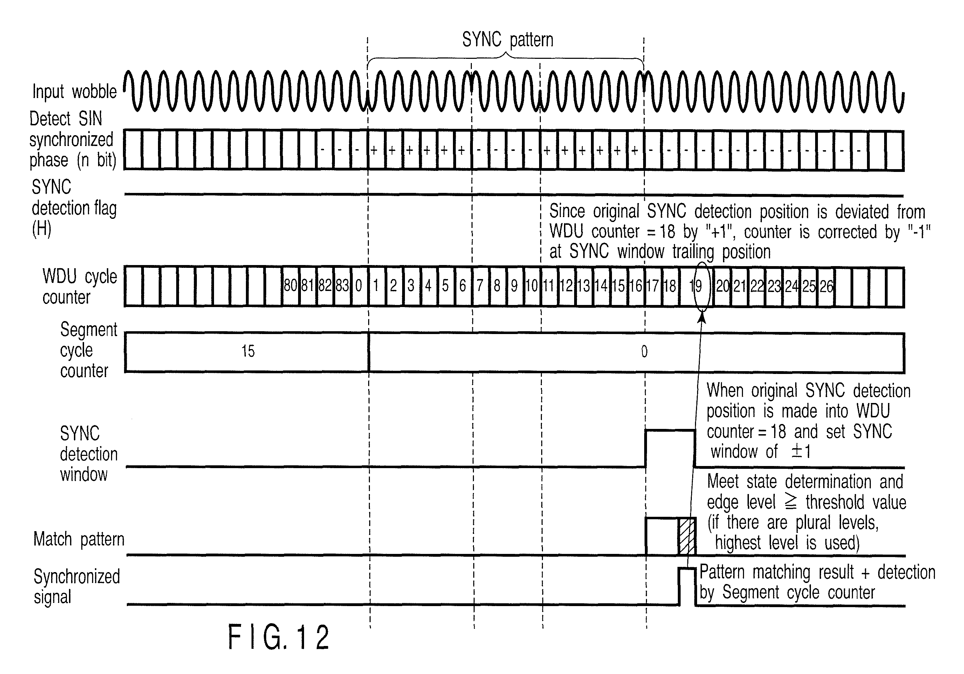

FIG. 12 illustrates the operation timing when the SYNC is detected one wobble after the previous SYNC detection (the segment cycle + 1: after 1429 wobbles) due to the influence by the noise and the disturbance or the like when the SYNC is detected at least once and the SYNC detection flag is placed.

Also in this SYNC detection, as with FIG. 11, the SYNC detection window is opened at the WDU cycle counter 64 = 18 ± 1, and when the SYNC is detected in this SYNC detection window, it is determined that the SYNC detection is achieved.

In FIG. 12, the point at the edge level, which meets the state detection by the SYNC detection and meets the threshold value, is located at the WDU cycle counter 64 = 19, and this results in that the SYNC is detected at a segment cycle of not after 1428 wobbles but after 1429 wobbles from the SYNC detection point one wobble before the WDU cycle counter 64 = 17, so that the WDU cycle counter 64 is advanced by "+1". Therefore, the WDU cycle counter 64 is corrected to be late by "-1", namely, the correction of the WDU cycle counter 64 = 20 → 19 is carried out at a SYNC window trailing position.

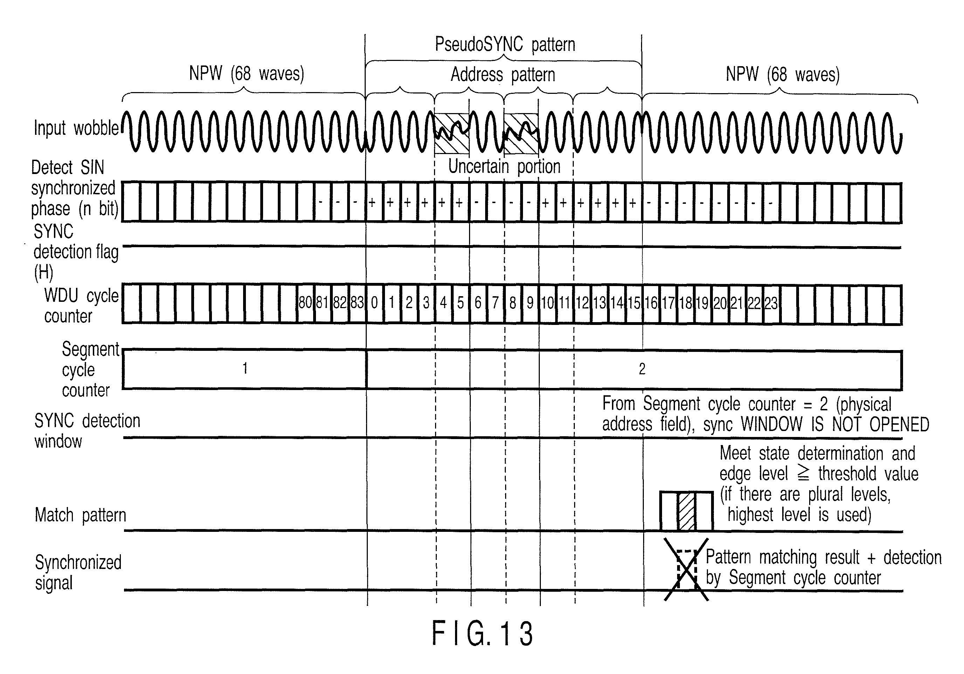

FIG. 13 illustrates a timing pattern having a possibility of false detection of the SYNC. In this case, the address pattern of the physical address field seems as the SYNC pattern due to the noise and the disturbance or the like. However, in this embodiment, the SYNC detection window is only opened in the SYNC field (the "0"th WAP in FIG. 6: the Segment cycle counter 65 = 0), so that even if the false detection occurs in the detection of the SYNC pattern, the flag is dropped down at Gate of the SYNC detection window and there is no false detection of SYNC.

FIG. 14 is a block diagram showing an example to detect the physical address field head as a modified example of the SYNC detection by using the counter system and the SYNC pattern detection system. As shown in FIG. 6, since the physical address (54) is started just after the SYNC pattern (53), the correct physical address cannot be detected unless after the SYNC is detected.

Therefore, due to the SYNC output outputted from the SYNC detection circuit 42 in FIG. 7, the flag showing that the SYNC detection is carried out is placed. Then, in the case where the flag showing that this SYNC detection is carried out is place, the physical address detection is carried out.

In the meantime, in the circuit configuration of FIG. 14, the SYNC output of the SYNC detection circuit 42 is inputted in a counter/comparison enable creating section 67 and the flag showing that the SYNC detection is carried out is placed. When this flag is active (= "1"), on the basis of the outputs of a WDU cycle counter 68 and a Segment cycle counter 69, which count the SIN synchronized phase detection signal, an address head detection signal 70 to create the address head detection window is driven.

On the other hand, as with the circuit configuration of FIG. 7, the SIN synchronized phase detection signal is processed by a shift resister 71 and a pattern operation section 72. Then, a difference operation of a coding changed point of the shifted signal (IPW → NPW / NPW → IPW: edge detection) and detection of stability (accordance of the codes) of the state by comparing the codes of the signals at a point other than the edge changed point are carried out.

A comparison determining section 73 outputs an address head detection signal assuming that the address head is detected in the case where it is determined that the edge detection value in the pattern operation section 72 is not less than the threshold value and the state coincides with the address head (for example, the SIN synchronized phase detection signal is "+ + + +") when the flag showing that the SYNC detection is carried out is "1".

The address head detection signal outputted from the comparison determining section 73 in this way is inputted in the physical address holding section 48 via a Gate/counter correction value creating section 74 as a signal for catching the head position of the address field during a period of time that the address head detection window has been generated.

In the meantime, when the address head detection signal is generated from the comparison determining section 73 during a period of time when the address head detection window is not opened, the address head detection signal is not passed through the Gate/counter correction value creating section 74 assuming that this signal is falsely detected.

Receiving the address head detection signal, the physical address holding section 48 fetches the SIN synchronized phase detection signal just after the address head detection signal and holds it therein as physical address information. The physical address information (address of three bits, bit 2 to bit 0) held in this way becomes the physical address output.

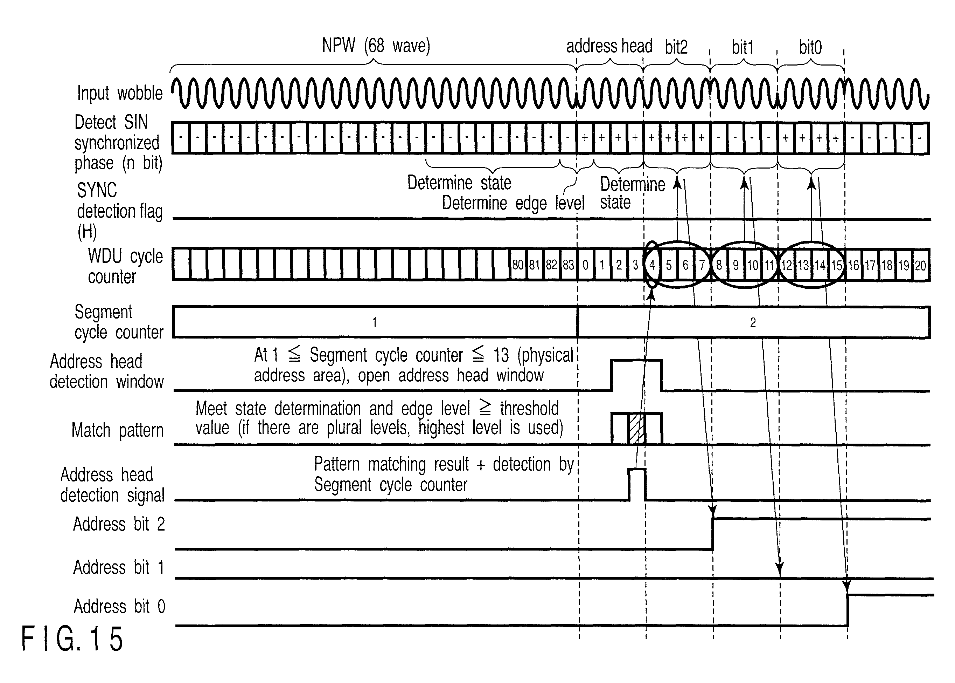

FIG. 15 illustrates the operation timing of the detection of the physical address head. According to this example, the physical address head detection window is opened at the WDU cycle counter 68 = 2 to 4. In the case where the physical address head is detected at the WDU cycle counter 68 = 3, the WDU cycle counter is not corrected, the codes of the values obtained by adding four wobbles to each of bit 2 to 0 of the WDU cycle counter 68 = 4 to 15 are latched as a physical address, and the physical address is acquired.

In the case where the head of the physical address is detected in the physical address head detection window at the WDU cycle counter 68 = 2 or 4, the WDU cycle counter 68 is corrected respectively, and in the same way, the physical address is acquired.

In the meantime, the present invention is not limited to the above-described embodiments as it is and in the execution phase, various modifications thereof can be made within the range not deviating from the spirit of the invention. In addition, by appropriately combining a plurality of components disclosed in the above-described embodiments, various inventions can be made. For example, from all components shown in the embodiments, some components may be deleted. Further, the components of the different embodiments may be appropriately combined.

## Claims

1. A synchronized signal detector **characterized by** comprising:
a creating section (41) configured to create a synchronized phase detection signal in which a second data unit (WAP) including a synchronization field made of a first data unit (WDU) and an address field made of plural aggregations of the first data unit (WDU) is repeatedly arranged;
a generation section (64 to 66) configured to generate a synchronization window signal corresponding to a position of the synchronization filed on the basis of a value obtained by counting the synchronized phase detection signal created by the creating section (41) at a cycle of the first data unit (WDU) and a value obtained by counting the number of the first data unit (WDU) by a cycle of the second data unit (WAP);
a detecting section (60 to 62) configured to detect a synchronized signal showing the head of the address field while determining the sate of the synchronization field from the synchronized phase detection signal created by the creating section (41); and
an output section (63) configured to output a detection signal outputted from the detecting section (60 to 62) as a synchronization detection signal during a period of generation of a synchronization window signal by the generation section (64 to 66).

2. A synchronized signal detector according to claim 1, **characterized in that** the generation section (64 to 66) comprises a first counter (64) configured to count the synchronized phase detection signal created by the creating section (41) at the cycle of the first data unit (WDU); a second counter (65) configured to count the number of the first data unit (WDU) on the basis of the output from the first counter (64) at the cycle of the second data unit (WAP); and a synchronization window signal generation section (66) configured to generate a synchronization window signal corresponding to a position of the synchronization field on the basis of the outputs from the first and second counters (64, 65).

3. A synchronized signal detector according to claim 1, **characterized in that** the detecting section (60 to 62) comprises a pattern detecting section (60, 61) configured to detect a pattern of the synchronized phase detection signal created by the creating section (41); and a comparison determining section (62) configured to determine if the pattern detected by the pattern detecting section (60, 61) corresponds to a pattern specific to the synchronization field.

4. A synchronized signal detector according to claim 1, **characterized by** further comprising:
an address head detecting section (67 to 74) configured to output an address head detection signal showing the head of the address field in the synchronized phase detection signal on the basis of the synchronization detection signal outputted from the output section (63); and
an address holding section (48) configured to hold the content of the address field following the address head detection signal outputted from the address head detecting section (67 to 74) on the basis of the address head detection signal as the information indicating the physical address of the address field and output it.

5. A synchronized signal detector according to claim 1, **characterized in that** the creating section (41) creates a synchronized phase detection signal on the basis of a wobble signal reproduced from an optical disk (11); the first data unit is WDU; and the second data unit is WAP.

6. A synchronized signal detecting method,
**characterized by** comprising:
a first step (41) of creating a synchronized phase detection signal in which a second data unit (WAP) including a synchronization field made of a first data unit (WDU) and an address field made of plural aggregations of the first data unit (WDU) is repeatedly arranged;
a second step (64 to 66) of generating a synchronization window signal corresponding to a position of the synchronization filed on the basis of a value obtained by counting the synchronized phase detection signal created in the first step (41) at a cycle of the first data unit (WDU) and a value obtained by counting the number of the first data unit (WDU) by a cycle of the second data unit (WAP);
a third step (60 to 62) of detecting a synchronized signal showing the head of the address field while determining the sate of the synchronization field from the synchronized phase detection signal created in the first step (41); and
a forth step (63) of outputting a detection signal outputted from the third step (60 to 62) as a synchronization detection signal during a period of generation of a synchronization window signal by the second step (64 to 66).

7. A synchronized signal detecting method according to claim 6, **characterized by** further comprising:
a fifth step (67 to 74) of outputting an address head detection signal showing the head of the address field in the synchronized phase detection signal on the basis of the synchronization detection signal outputted from the fourth step (63); and
a sixth step (48) of holding the content of the address field following the address head detection signal outputted from the fifth step (67 to 74) on the basis of the address head detection signal as the information indicating the physical address of the address field and output it.

8. An optical disk device **characterized by** comprising:
a motor (12) configured to rotatably drive an optical disk (11) in which a synchronized phase detection signal in which a second data unit (WAP) including a synchronization field made of a first data unit (WDU) and an address field made of plural aggregations of the first data unit (WDU) is repeatedly arranged is recorded by a wobble modulation;
a pickup (14) configured to read a wobble-modulated signal from the optical disk (11) that is rotatably driven by the motor (12);
a creating section (41) configured to create the synchronized phase detection signal from the wobble-modulated signal read by the pickup (14);
a generation section (64 to 66) configured to generate a synchronization window signal corresponding to a position of the synchronization filed on the basis of a value obtained by counting the synchronized phase detection signal created by the creating section (41) at a cycle of the first data unit (WDU) and a value obtained by counting the number of the first data unit (WDU) by a cycle of the second data unit (WAP);
a detecting section (60 to 62) configured to detect a synchronized signal showing the head of the address field while determining the sate of the synchronization field from the synchronized phase detection signal created by the creation section (64 to 66); and
an output section (63) configured to output a detection signal outputted from the detecting section (60 to 62) as a synchronization detection signal during a period of generation of a synchronization window signal by the generation section (64 to 66).

9. An optical disk device according to claim 8,
**characterized by** further comprising:
an address head detecting section (67 to 74) configured to output an address head detection signal showing the head of the address field in the synchronized phase detection signal on the basis of the synchronization detection signal outputted from the output section (63); and
an address holding section (48) configured to hold the content of the address field following the address head detection signal outputted from the address head detecting section (67 to 74) on the basis of the address head detection signal as the information indicating the physical address of the address field and output it.
